# EUROPÄISCHE PATENTSCHRIFT

(11) **EP 0 652 132 B1**
(45) Veröffentlichungstag und Bekanntmachung des Hinweises auf die Patenterteilung: **10.06.1998**
(21) Anmeldenummer: 94117443.5
(22) Anmeldetag: 04.11.1994
(51) Int. Cl.: B60P 1/64, B60P 7/13

(54) **Kraftfahrzeug für den Transport von Wechselboxen**
Motor vehicle for transport of exchangeable containers
Véhicule à moteur pour le transport de conteneurs échangeables

(30) Priorität: 04.11.1993 DE 9316870 U; 29.10.1994 DE 9417370 U
(43) Veröffentlichungstag der Anmeldung: 10.05.1995
(73) Patentinhaber: RKB-Reparatur und Karosseriebau GmbH, D-04720 Döbeln (DE)
(72) Erfinder: Hoffmann, Hartwig, D-04720 Mochau (DE); Bockhöfer, Hartmut, D-49191 Belm (DE); Schulz, Jürgen, D-04720 Döbeln (DE)
(74) Vertreter: Busse & Busse Patentanwälte

(56) Entgegenhaltungen:
- DE-A- 1 901 086
- DE-U- 7 220 916
- FR-A- 967 010
- FR-A- 1 013 528
- FR-A- 1 585 958
- FR-A- 1 601 505
- US-A- 3 029 960
- US-A- 5 195 764

## Beschreibung

Die Erfindung betrifft ein Kraftfahrzeug für den Transport von Wechselboxen gemäß dem Oberbegriff des Anspruchs 1.

Gemäß FR-A-967 010, welche die Merkmale des Oberbegriffs von Anspruch 1 offenbart, ist ein Kraftfahrzeug mit einem einen Lastaufnahmebereich aufweisenden Fahrgestell offenbart, das über einen Kurbelantrieb im Bereich der Hinterachse absenkbar ist, so daß danach die Hinterräder außenseitig an einem Wechsel-Container vorbeibewegbar sind und das Fahrgestell in eine im Nahbereich der Fahrerkabine an Pufferteilen abgestützte Anlagestellung unter den Wechsel-Container einfahrbar ist. In dieser Unterfahrstellung wird der Lastaufnahmeteil so angehoben, daß zwei sich zwischen Vorderachse und Hinterachse erstreckende Längsträger den Wechsel-Container untergreifen und dieser einerseits auf der Hinterachse über Rollenkörper und andererseits über jeweilige Hakenteilen im Nahbereich der vorderen Pufferteile aufgenommen ist. Diese Stütz- bzw. Halteteile sind instabil und die Rahmenkonstruktion weist insgesamt eine Gestellhöhe auf, die das Ladevolumen nachteilig einschränkt. Gemäß US-A-3 029 960 ist ein mit einem Mittel-Längsträger versehenes Fahrgestell vorgesehen, das bei geringer Verwindungssteife und begrenzter Ladehöhe nicht für die Aufnahme eines Containers geeignet ist.

Der Erfindung liegt die Aufgabe zugrunde, ein Kraftfahrzeug für den Transport einer Wechselbox zu schaffen, dessen an weitgehend beliebige Kleintransporter mit geringem Aufwand ansetzbares Fahrgestell bei belastungsoptimaler Abstützung eine maximale Ausnutzung des Transportvolumens und -gewichts der Wechselbox ermöglicht, wobei diese sowohl bei direkter Ladegutverteilung als auch bei einem Boxenwechsel an beliebigen Aufstellorten einfach handhabbar ist.

Diese Aufgabe wird durch die Merkmale des kennzeichnenden Teils von Anspruch 1 gelöst. Dabei ist das erfindungsgemäße Fahrgestell eines serienmäßig hergestellten Kleintransporters im Lastaufnahmebereich mit einer angeflanschten Stütz-Konstruktion versehen, die bei maximaler Ausnutzung des Transportvolumens der Wechselbox diese als kleinste Transporteinheit eines Großcontainer-Verbundes so aufnimmt, daß die Wechselbox als flexibel handhabbare Einzelladung mit vermindertem Aufwand zu einem Abnehmer dieser kleinen Verteileinheit transportiert werden kann.

Auf der Basis eines serienmäßigen Kraftfahrzeugs in Form eines Kleintransporters, wird dessen Fahrgestell geteilt und im hinteren Bereich als eine Verbundbaueinheit ausgebildet, wobei ein Serienrahmen entsprechend verstärkt wird sowie durch einen Einsatz von 8" oder 10" Rädern und eines Niederflurquerschnittsrahmens im Lastbereich tiefliegend ist. Damit läßt sich bei Verzicht auf den Einsatz von Radkästen eine Tritthöhe von maximal 55 cm erzielen, so daß die nur eine auf der Verbundbaueinbefindliche Wechselbox ohne zusätzliche Hilfsmittel, beispielsweise eine Laderampe oder dgl., zugänglich ist.

Das Fahrgestell des Kraftfahrzeuges wird entsprechend der zu transportierenden Wechselbox so gestaltet, daß die Auflage- und Transportsicherungspunkte des Containers auch auf dem Rahmen des Transportfahrzeuges als Auflage- und Transportsicherungspunkte verwendet werden. Der Rahmen eines serienmäßigen Kraftfahrzeuges, vorzugsweise das Fahrgestell eines Kleintransporters, wird entsprechend den Belastungen der Wechselbox verstärkt. Vorzugsweise wird dieses Kraftfahrzeug ein Dreiachser sein, wobei im Lastbereich, dem hinteren Teil des Kraftfahrzeuges, zwei Achsen montiert werden. Im Lastbereich kommt ein Niederflurquerschnittsrahmen und Räder mit 8" oder 10" Durchmesser ohne Radkästen zum Einsatz, so daß durch die tiefliegenden Achsen am Fahrgestell eine maximale Tritthöhe von 55 cm erzielt wird.

An dem Rahmen des Kraftfahrzeuges sind bekannte Auflage-, Zentrierungs- und Verriegelungspunkte für die Wechselbox angebracht, mittels derer diese nach Art eines Containers auf dem Rahmen des Fahrzeuges aufgelegt und gesichert wird. Vorzugsweise können als Auflage- und Verriegelungspunkte zwischen Fahrzeug und Container die Auflage-, Zentrierungs- und Verriegelungspunkte genutzt werden, welche auch als Auflage- und Verriegelungspunkte zwischen mehreren Containern im Großcontainertransportsystem genutzt werden. Mittels einer Schnellspannvorrichtung, welche fest mit dem Rahmen des Fahrzeuges verbunden ist, und deren mittels eines Hebelsystems bewegte Spannelemente werden die Verriegelungspunkte am Container mit dem Fahrzeugrahmen so verbunden, daß ein Verrutschen der Ladung verhindert wird. Diese Schnellspannvorrichtung in Form einer Überdruckverriegelung besteht aus vorzugsweise vier Spannelementen, welche im Bereich der Verriegelungspunkte an der Wechselbox eingreifen und so ausgebildet sind, daß die Spannflächen der Spannelemente derart kurvenförmige Stirnflächen aufweisen, daß der Container fest auf den Fahrzeugrahmen gespannt ist.

In zweckmäßiger Ausführung sind die Spannelemente mit Verriegelungskeilen ausgebildet, mit denen auch bei einer hohen dynamischen Beanspruchung der Wechselbox beim Transport eine permanente Spannwirkung über die Keilflächen erreicht ist.

In zweckmäßiger Ausführung sind die Spannelemente mit Verriegelungskeilen ausgebildet, mit denen auch bei einer hohen dynamischen Beanspruchung der Wechselbox beim Transport eine permanente Spannwirkung über die Keilflächen erreicht ist.

Zur Erleichterung der Be- und Entladung der Wechselbox beim direkten Einsatz als Verteilbox für Ladegüter ist am Rahmenende ein trittfest gestaltetes Trittbrett angeordnet, dessen Tritthöhe zwischen Boden und Ladehöhe frei gewählt ist.

Mit der erfindungsgemäßen Ausbildung der Verbundbaueinheit im Bereich des Fahrgestell des Kleintransporters ist mit geringem technischen Aufwand eine überraschend flexibel einsetzbare Lösung zum Transport lediglich einer Wechselbox geschaffen, so daß vielfältige logistische Anforderungen, beispielsweise im Bereich der Haus-zu-Haus-Beförderung, dem Paketdienst und dgl. erfüllbar sind. Dabei ist mittels dem Verbundfahrgestell einerseits eine maximale Ausnutzung des Transportvolumens möglich und mit den vorteilhaft geringen Abmessungen des Kleintransporters als Basisfahrzeug andererseits eine kundenspezifische Flexibilität erreicht, die auch an schwer zugänglichen Zielpunkten, beispielsweise in Lagerhallen, an Montagebändern und dgl., ohne zusätzliches Hilfspersonal einen schnellen Boxenwechsel bzw. die Entnahme von Ladegütern aus der Wechselbox ohne zusätzliche Laderampen oder dgl. Hilfsmittel ermöglicht.

Weitere Einzelheiten und Vorteile der Erfindung ergeben sich aus der nachfolgenden Beschreibung und der Zeichnung, die ein Ausführungsbeispiel eines erfindungsgemäßen Kraftfahrzeugs für den Transport von Wechselboxen schematisch veranschaulicht. In der Zeichnung zeigen:
- Fig. 1: eine Draufsicht eines erfindungsgemäßen Kraftfahrzeugs mit einer in Umrißkontur dargestellten Wechselbox auf einem als Verbundbaueinheit ausgebildeten Fahrgestell,
- Fig. 2: eine teilweise geschnittene Seitenansicht des Kraftfahrzeugs gemäß Fig. 1,
- Fig. 3: eine Einzeldarstellung der mit dem vorderen Fahrgestellteil verbindbaren und einen Zwischenrahmenteil aufweisenden Verbundbaueinheit,
- Fig. 4: eine vergrößerte Einzeldarstellung einer Verriegelung für die Wechselbox,
- Fig. 5: eine Einzeldarstellung eines am Fahrgestell vorgesehenen Stützgliedes in einer bodenseitigen Stützstellung,
- Fig. 6: eine Seitenansicht ähnlich Fig. 2 mit der Verbundbaueinheit in einer oberen Hubstellung,
- Fig. 7: eine Seitenansicht ähnlich Fig. 6 mit der Verbundbaueinheit in einer unteren Hubstellung,
- Fig. 8: eine Seitenansicht ähnlich Fig. 7 mit dem Fahrzeug in Unterfahrstellung, und
- Fig. 9: eine Draufsicht eines mehrere Wechselboxen aufnehmenden Fahrgestellrahmens.

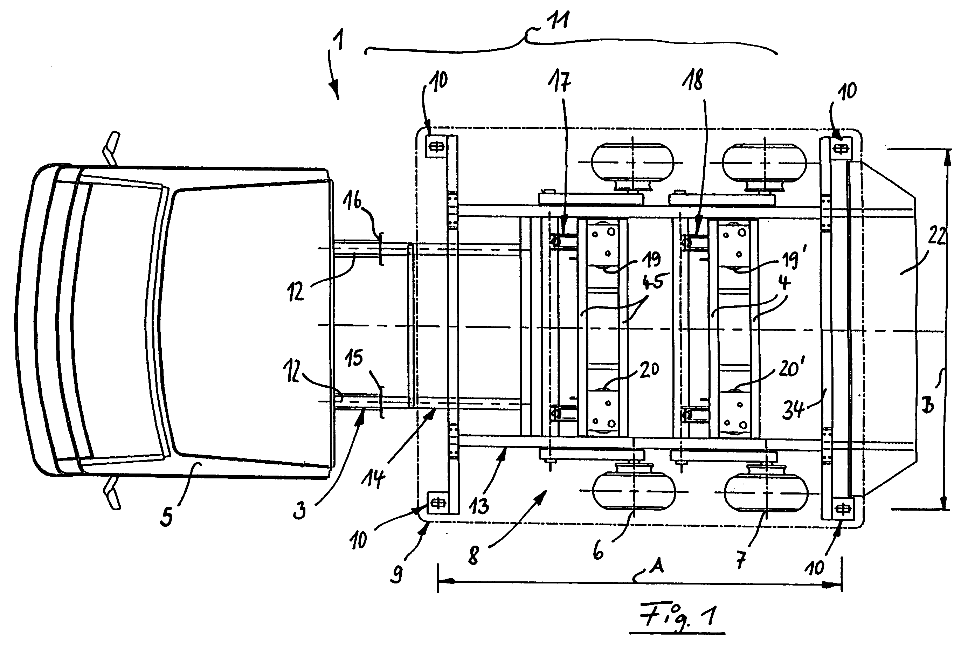

In Fig. 1 ist ein insgesamt mit 1 bezeichnetes, insbesondere als Kleintransporter ausgebildetes Kraftfahrzeug erfindungsgemäßer Ausführung dargestellt, dessen Fahrgestell 2 einen vorderen Fahrgestellabschnitt 3 aufweist, der sich im Bereich einer Vorderradachse 4 unterhalb einer Fahrerkabine 5 erstreckt. Im Bereich jeweiliger Hinterradachsen 6,7 ist das Fahrgestell 2 mit einem Lastaufnahmebereich 8 versehen, auf dem eine lediglich mit Konturlinien dargestellte Wechselbox 9 in jeweiligen Eckbereichen über mehrere, in ihrem Längsabstand A und Querabstand B auf entsprechende Gegenglieder an der Wechselbox 9 abgestimmte Verriegelungen 10 festlegbar ist.

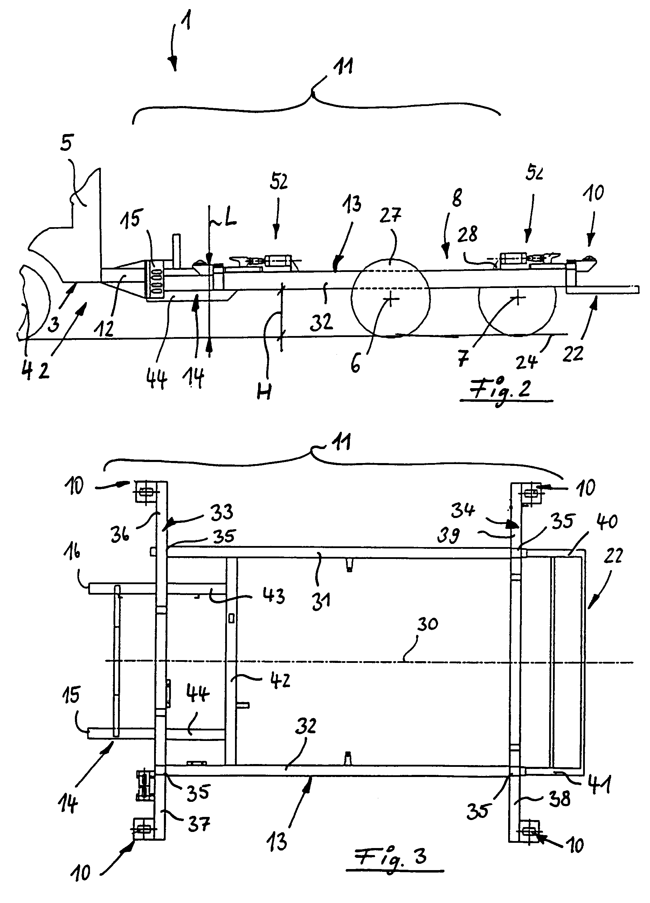

Die Seitenansicht des Kraftfahrzeugs 1 gemäß Fig. 2 verdeutlicht, daß das Fahrgestell 2 als eine im wesentlichen dreiteilige Verbundbaueinheit 11 ausgebildet ist, wobei in zweckmäßiger Ausführung das Fahrgestell des in Standardbauweise eines Serienfahrzeugs vorliegenden Kleintransporters unmittelbar hinter der Fahrerkabine 5 so getrennt wird, daß ein vorderes Fahrgestellteil 12 verbleibt und an diesem in Anpassung an erhöhte Gewichtsbelastungen ein Lastgestellteil 13 mit Niederflurquerschnittsrahmen über einen Zwischenrahmenteil 14 im Bereich von Flanschteilen 15,16 angekoppelt wird.

Die Verbundbaueinheit 11 ist dabei mit zumindest einer Luftfederkurbelachse 17,18 (Fig. 1) versehen, so daß dem Fahrzeug 1 bzw. der Verbundbaueinheit 11 über jeweils mit einer Druckluftsteuerung (nicht dargestellt) verbundene Federbälge 19,20,19',20' zumindest zwei Hubstellungen vermittelbar sind, wobei insbesondere die auf dem Lastgestellteil 13 befindliche Wechselbox in diese Hubstellungen verbringbar ist.

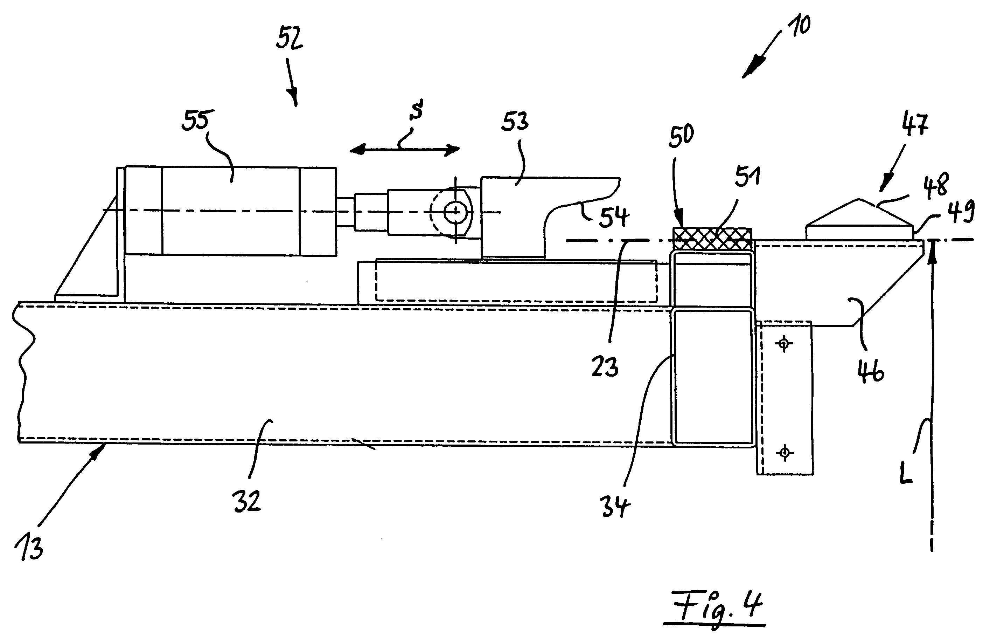

Auf der in Fig. 2 schematisch dargestellten Verbundbaueinheit 11 kann die Wechselbox 9 mittels der als jeweilige Auflage-, Zentrierungs- und Schnellverriegelungsglieder vorgesehenen Verriegelungen 10 in einer ersten Stützstellung so festgelegt werden, daß in zweckmäßiger Ausführung eine Begehbarkeit der Wechselbox 9 über ein am Lastgestellteil 13 abgestütztes hinteres Trittbrett 22 möglich ist. Durch die Ausbildung der Verbundbaueinheit 11 mit dem Niederflurquerschnittsrahmen ist dabei in dieser Stützstellung insgesamt eine Fahrgestellhöhe H erreicht, die einen beliebigen seitlichen oder rückseitigen Zugang zur Wechselbox 9 ermöglicht. In zweckmäßiger Ausführung definiert die Verbundbaueinheit 11 im Bereich ihrer Auflageglieder eine Ladeebene 23 (Fig. 4), mit der die Wechselbox 9 bodenseitig in einer Ladehöhe L von 45 cm bis 60 cm, vorzugsweise von 54 cm, positionierbar ist. Mit dieser bodennahen Festlegung der Wechselbox 9 ist mit geringem konstruktiven Aufwand die Möglichkeit geschaffen, die Wechselbox 9 in ihrer Höhenabmessung entsprechend zu erweitern und damit ein größeres Ladevolumen zu erreichen.

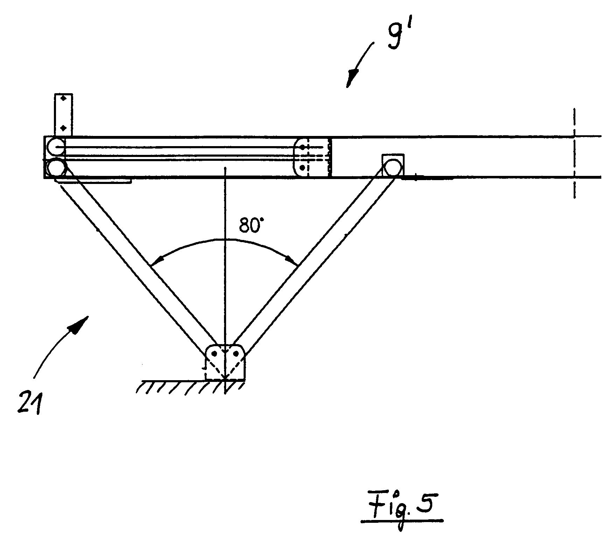

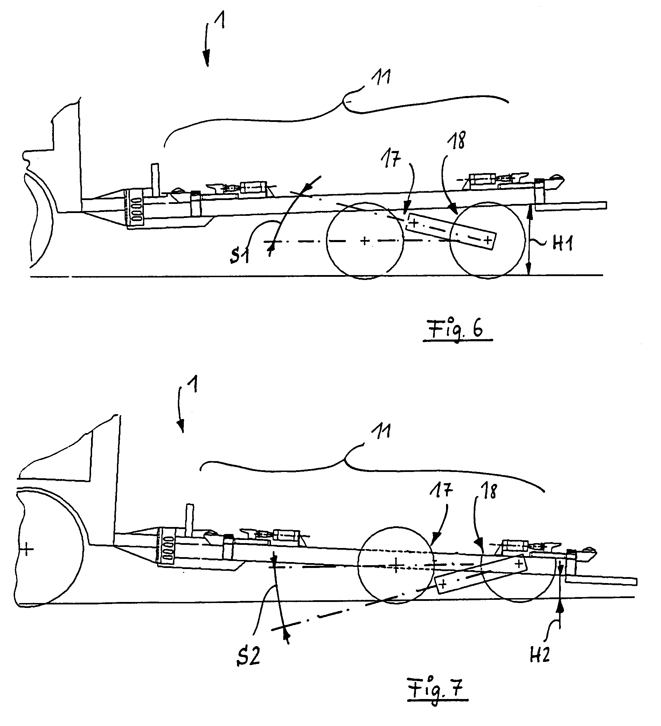

In der Darstellung gemäß Fig. 1 sind die jeweils die Verbundbaueinheit 11 untergreifenden Federbälge 19,20,19',20' veranschaulicht, mit denen die auf dem Lastgestellteil 13 befindliche Wechselbox 9 bzw. die Verbundbaueinheit 11 über eine erste Schwenkbewegung (Pfeil S1) im Bereich der Luftfederkurbelachsen 17,18 in eine erste obere Hubstellung H1 (Fig. 6) verbringbar ist, in der jeweilige, an der Verbundbaueinheit 11 bzw. der Wechselbox 9 befindliche Stützglieder 21 (Fig. 5) so freigegeben werden können, daß die Wechselbox 9 in einer zweiten, eine freistehenden Be- und Entladestellung bildenden Stützstellung (nicht dargestellt) im Bereich des Bodens 24 absetzbar ist.

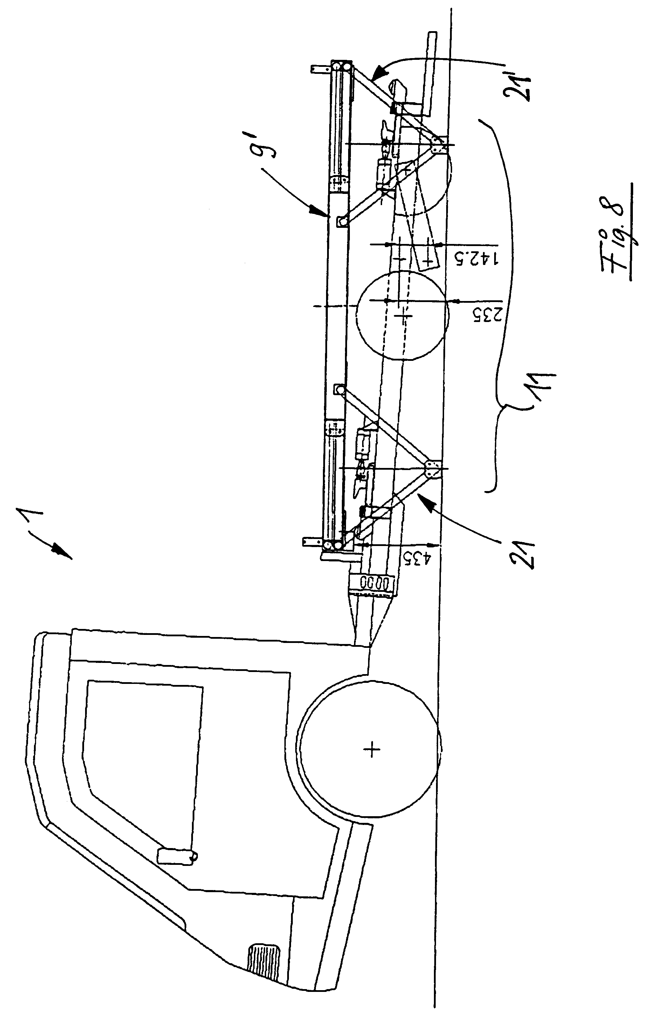

Mittels der eine zweite Schwenkbewegung (Pfeil S2) vermittelnden Federbälge 19,20,19',20' kann die Verbundbaueinheit 11 in eine zweite, untere Hubstellung H2 (Fig. 7) bewegt und in dieser Hubstellung H2 das Fahrzeug 1 von der Wechselbox 8 gelöst, in die Fahrstellung (Fig. 2) verbracht und zu einer anderen Wechselbox bewegt werden. Nach der Be- bzw. Entladung der abgesetzten Wechselbox 9 kann diese von der Verbundbaueinheit 11 unterfahren (Hubstellung H2) und durch das Anheben der Federbälge 19,20,19',20' (Hubstellung H1) wiederholt in der ersten Stützstellung auf der Verbundbaueinheit 11 aufgenommen und in der Fahrstellung (Fig. 2) transportiert werden.

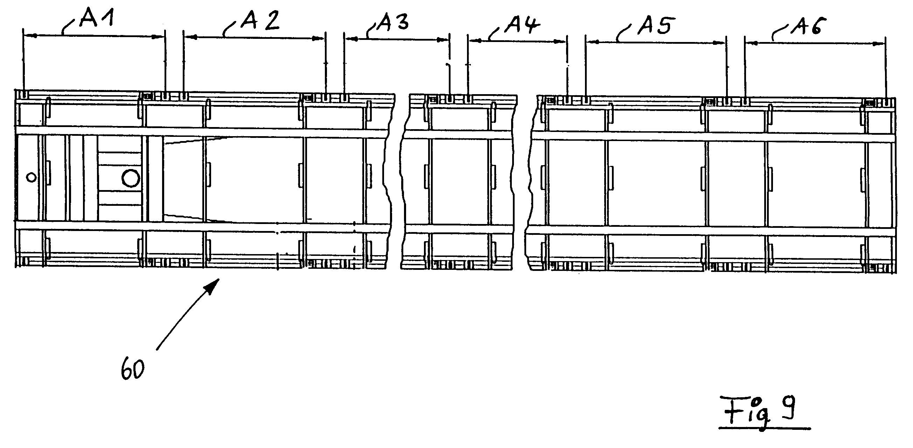

In zweckmäßiger Ausführung sind die Teile der Verbundbaueinheit 11 konstruktiv so auf die Federbälge 19,20,19',20' bzw. die beiden Luftfederkurbelachsen 17,18 abgestimmt, daß die Verbundbaueinheit 11 zumindest in der unteren Hubstellung H2 eine zur Horizontalen geneigte Schwenkstellung S2 aufweist, in der die vorbeschriebenen Wechselbewegungen beim Absetzen bzw. Anheben der Wechselbox 9 möglich sind. In Fig. 8 ist das Fahrzeug 1 in der Unterfahrstellung unter der lediglich im Rahmenbereich 9' dargestellten Wechselbox 9 veranschaulicht, wobei diese bodenseitig über die Stützglieder 21 abgestützt ist.

Die Verringerung der Ladehöhe L im Bereich der Verbundbaueinheit 11 ist zusätzlich zu dem Niederflurquerschnittsrahmen dadurch gewährleistet, daß die an den Luftfederkurbelachsen 17,18 bzw. den Radachsen 6,7 abgestützten Rädern jeweils mit einem Durchmesser von 8" und 10" ausgebildet sind und damit lediglich jeweilige, die Verbundbaueinheit 11 überragende Radsegmente 27,28 (Fig. 2) bis in den Bodenbereich der Wechselbox 9 überstehen, diesen jedoch im Bereich ihres Federweges nicht berühren.

Zum Erreichen der notwendigen Stabilität der Verbundbaueinheit 11 ist das Lastgestellteil 13 mit zwei zur Fahrzeuglängsachse 30 parallelen Längsträgern 31,32 (Fig. 3) versehen, an deren jeweiligen Enden zwei ihrerseits endseitig die Auflage- und Zentrierungsglieder 10 für die Wechselbox 9 tragende Querträger 33,34 angeordnet sind. In vorteilhafter Ausbildung sind dabei die Querträger 33,34 mit einem jeweils über den Verbindungsbereich 35 mit den Längsträgern 31,32 frei überragenden Endbereichen 36,37,38,39 versehen und die jeweiligen Zentrierungsglieder 10 parallel zur Mittellängsachse 30 an diesen angelenkt.

In der gemäß Fig. 3 dargestellten Ausführungsform sind die Längsträger 31,32 des Lastgestellteiles 13 rückseitig im Bereich des hinteren Querträgers 34 mit Verlängerungsteilen 40,41 versehen, auf denen das Trittbrett 22 abgestützt ist.

Zur Verbindung des Lastgestellteiles 13 mit dem Zwischenrahmenteil 14 weist dieses zwei einenends an einer zwischen den Längsträgern 31,32 des Lastgestellteiles 3 befindlichen Zwischenstrebe 42 abgestützte Längstreben 43,44 auf, die anderenends über die Flanschteile 15,16 mit dem vorderen Fahrgestellteil 12 verbunden sind (Fig.2). In zweckmäßiger Ausführung untergreifen dabei die Längsstreben 43,44 des Zwischenrahmtenteiles 14 den vorderen Querträger 33, so daß in diesem Bereich der Verbundbaueinheit 11 eine hinreichende Verwindungssteife erreicht ist. Andererseits sind die Längsträger 31,32 des Lastgestellteiles 13 im Bereich der Federbälge 19,20 bzw. 19',20' über paarweise zwischengeordnete Stützstreben 45,45' so verbunden, daß zusätzlich zu dem hinteren Querträger 34 der mittlere Bereich des Lastgestellteiles 13 eine Stabilisierung erfährt (Fig. 1).

Die Darstellung gemäß Fig. 4 verdeutlicht in vergrößerter Einzeldarstellung eine zweckmäßige Anordnung der Bauteile im Bereich der Verriegelungen 10, wobei als Zentrierungsglied für die Wechselbox 9 jeweils ein über ein Stützprofilteil 46 mit dem Querträger 33 bzw.34 des Lastgestellteiles 13 verbundener Zentrierpilz 47 vorgesehen ist, dessen im Querschnitt kegelige Aufnahmefläche 48 in eine zumindest bereichsweise zylindrische Mantelfläche 49 übergeht. Die auf diesem Zentrierpilz 47 positionierte Wechselbox 9 (nicht dargestellt) gelangt in Stützstellung in den Bereich des Auflagegliedes 50, das in zweckmäßiger Ausführung als eine im Bereich der jeweiligen Zentrierpilze 47 auf dem Querträger 33 bzw. 34 festgelegte Gummiplatte 51 ausgebildet ist. Die Zentrierpilze 47 sind dabei in vorteilhafter Ausführung in einem Längenabstand A von 2280 mm angeordnet und der Querabstand B beträgt 1970 mm. Damit kann die Wechselbox 9 unter optimaler Raumausnutzung sowohl auf dem Fahrzeug 1 aufgenommen als auch auf einem Containerchassis (Fig. 9) transportiert werden.

Die Seitenansicht gemäß Fig. 2 veranschaulicht in Zusammenschau mit Fig. 4 die bevorzugte Ausbildung jeweilige Schnellverriegelungsglieder 52, wobei diese als jeweils im Verbindungsbereich 35 der Längsträger 31 und 32 mit den Querträgern 33 und 34 angeordnete Verriegelungskeile 53 ausgebildet sind (Fig. 4). Diese Verriegelungskeile 53 können jeweils über eine im wesentlichen parallel zur Fahrzeuglängsachse 30 verlaufende Schubbewegung (Pfeil S) so bewegt werden, daß ein im Bodenbereich der Wechselbox 9 befindliches Gegenglied (nicht dargestellt) von einer Auflauffläche 54 am Verriegelungskeil 53 hintergriffen ist. In zweckmäßiger Ausführung sind die vier in den Eckbereichen des Lastgestellteiles 13 befindlichen Verriegelungskeile 53 jeweils einzeln über ein pneumatisches Antriebsorgan 55 bewegbar. Ebenso ist denkbar, ein mechanisches, elektrisches oder hydraulisches Antriebsorgan vorzusehen, mit dem nach den vorbeschriebenen Wechselvarianten jeweils die eine Wechselbox 9 in ihrer Stützstellung auf dem Kraftfahrzeug 1 festlegbar ist.

In Fig. 9 ist ein mit dem erfindungsgemäßen Kraftfahrzeug 1 als Teil eines Verteil- und Transportsystems zusammenwirkendes Containerchassis 60 dargestellt, auf dem über im jeweils gleichen Abstand A1 bis A6 angeordnete Verriegelungen bis zu sechs Wechselboxen (nicht dargestellt) im Verbund so transportiert werden können, daß beispielsweise in einem Verteilzentrum die Wechselboxen 9 auf das Kraftfahrzeug 1 umgeladen und deren Inhalt danach als kleine Transporteinheit schnell und mit geringem Aufwand verteilt werden kann.

## Patentansprüche

1. Kraftfahrzeug für den Transport von Wechselboxen, dessen sich vom Bereich einer unterhalb einer Fahrerkabine (5) befindlichen Vorderradachse (4) in den Bereich einer Hinterradachse (6,7) erstreckendes Fahrgestell (2) mit einem Verriegelungen (10) für eine Wechselbox (9) aufweisenden Lastaufnahmebereich (8) versehen ist, wobei dieser mittels einer Kurbelachse aus seiner die Fahrstellung bildenden Hubstellung (H) in eine die Wechselbox freigebende zweite Hubstellung (H2) absenkbar ist, **dadurch gekennzeichnet,** daß das Fahrgestell (2) als eine im wesentlichen dreiteilige Verbundbaueinheit (11) ausgebildet ist, die einen in Standardbauweise eines Kleintransporters vorgesehenen vorderen Fahrgestellteil (12), ein Lastgestellteil (13) mit Niederflurquerschnittsrahmen und einen die beiden Gestellteile (12,13) verbindenden Zwischenrahmenteil (14) aufweist und im Bereich des Lastgestellteiles (13) zwei Luftfederkurbelachsen (17;18) mit jeweils zwei Federbälgen (19,20;19',20') vorgesehen sind, die durch eine Druckluftsteuerung verbunden sind.

2. Kraftfahrzeug nach Anspruch 1, dadurch gekennzeichnet, daß die Verbundbaueinheit (11) über jeweilige Auflage-, Zentrierungs- und Schnellverriegelungsglieder (50, 47, 52) die Wechselbox (9) in der die Fahrstellung bildenden Hubstellung (H) derart aufnimmt, daß die Wechselbox eine über ein am Lastgestell (13) abgestütztes Trittbrett (22) zugängliche Stützstellung aufweist.

3. Kraftfahrzeug nach Anspruch 1 oder 2, dadurch gekennzeichnet, daß die Verbundbaueinheit (11) mittels der Federbälge (19,20;19',20') in einer jeweilige Stützglieder (21) für die Wechselbox (9) freigebenden oberen Hubstellung (H1) so positionierbar ist, daß danach die Wechselbox (9) in einer freistehenden Be- und Entladestellung absetzbar ist.

4. Kraftfahrzeug nach einem der Ansprüche 1 bis 3, dadurch gekennzeichnet, daß die an den Luftfederkurbelachsen (17, 18) befindlichen Räder jeweils als 8"- oder 10"-Räder ausgebildet sind.

5. Kraftfahrzeug nach einem der Ansprüche 1 bis 4, dadurch gekennzeichnet, daß das Lastgestellteil (13) mit zwei Längsträgern (31,32) versehen ist, an deren jeweiligen Enden zwei endseitig die Auflage- und Zentrierungsglieder (10) für die Wechselbox (9) tragende Querträger (33,34) angeordnet sind, wobei diese einen über den Verbindungsbereich (35) mit den Längsträgern (31,32) frei überragenden Endbereich (36,37,38,39) aufweisen.

6. Kraftfahrzeug nach einem der Ansprüche 1 bis 5, dadurch gekennzeichnet, daß die Längsträger (31,32) des Lastgestellteiles (13) rückseitig im Bereich des hinteren Querträgers (34) mit Verlängerungsteilen (40,41) versehen sind, auf denen das Trittbrett (22) abgestützt ist.

7. Kraftfahrzeug nach einem der Ansprüche 1 bis 6, dadurch gekennzeichnet, daß der Zwischenrahmenteil (14) zwei einenends an einer zwischen den Längsträgern (31,32) des Lastgestellteiles (13) befindlichen Zwischenstrebe (42) abgestützte Längsstreben (43,44) aufweist, die anderenends über jeweilige Flanschteile (15,16) mit dem vorderen Fahrgestellteil (12) verbunden sind.

8. Kraftfahrzeug nach Anspruch 7, dadurch gekennzeichnet, daß die Längsstreben (43,44) des Zwischenrahmenteils (14) den vorderen Querträger (33) untergreifen.

9. Kraftfahrzeug nach einem der Ansprüche 1 bis 8, dadurch gekennzeichnet, daß als Zentrierungsglieder (10) jeweils ein über ein Stützprofilteil (46) mit dem Querträger (33,34) des Lastgestellteiles (13) verbundener Zentrierpilz (47) vorgesehen ist, dessen im Querschnitt kegelige Aufnahmefläche (48) in eine zumindest bereichsweise zylindrische Mantelfläche (49) übergeht.

10. Kraftfahrzeug nach einem der Ansprüche 1 bis 9, dadurch gekennzeichnet, daß als Auflageglied (50) für die Wechselbox (9) jeweils eine im Bereich der jeweiligen Zentrierpilze (47) auf dem Querträger (33,34) befindliche Gummiplatte (51) angeordnet ist.

11. Kraftfahrzeug nach einem der Ansprüche 1 bis 10, dadurch gekennzeichnet, daß als die Schnellverriegelungsglieder (52) jeweilige im Verbindungsbereich (35) von Längsträger (31,32) und Querträger (33,34) angeordnete Verriegelungskeile (53) vorgesehen ist.

12. Kraftfahrzeug nach Anspruch 11, dadurch gekennzeichnet, daß der Verriegelungskeil (53) jeweils über eine im wesentlichen parallel zur Fahrzeuglängsachse (30) verlaufende Schubbewegung (S) so bewegbar ist, daß ein im Bodenbereich der Wechselbox (9) befindliches Gegenglied von einer Auflauffläche (54) am Verriegelungskeil (53) hintergriffen ist.

13. Kraftfahrzeug nach Anspruch 11 oder 12, dadurch gekennzeichnet, daß die vier in den Eckbereichen des Lastgestellteiles (13) befindlichen Verriegelungskeile (53) jeweils einzeln über ein mechanisches, elektrisches, hydraulisches und/oder pneumatisches Antriebsorgan (55) beweglich sind.

14. Kraftfahrzeug nach einem der Ansprüche 1 bis 13, dadurch gekennzeichnet, daß die Verbundbaueinheit (11) im Bereich der Auflageglieder auf dem Lastteil (13) eine Ladeebene (23) mit einer Ladehöhe (L) von 45 cm bis 60 cm, vorzugsweise von 54 cm, aufweist.

15. Kraftfahrzeug nach einem der Ansprüche 1 bis 14, dadurch gekennzeichnet, daß die Zentrierpilze (47) auf dem Lastgestellteil in einem Längenabstand (A) von 2280 mm und einem Querabstand (B) von 1970 mm angeordnet sind.

## Claims

1. A motor vehicle for transporting interchangeable containers, of which the chassis (2) extending from the area of a front wheel axle (4) disposed under a driver's cabin (5) and into the area of a rear wheel axle (6, 7) is provided with a load-receiving area (8) comprising locking means (10) for an interchangeable container (9), the said load-receiving area (8) being adapted to be lowered by means of a crank drive out of its raised position (H) which constitutes the riding position into a second raised position (H2) which releases the interchangeable container, characterised in that the chassis (2) is constructed as a substantially three-part composite unit (11) consisting of a front chassis part (12) provided in the standard form of construction of a small transporter, a load-bearing chassis part (13) with a dropped cross-sectional frame and an intermediate frame part (14) connecting the two chassis parts (12, 13) and in that there are in the region of the load-bearing part (13) two air spring crank drives (17, 18) each with two spring bellows (19, 20; 19', 20') which are connected by a compressed air control arrangement.

2. A motor vehicle according to Claim 1, characterised in that the composite unit (11), by means of respective supporting, centring and rapid-locking members (50, 47, 52) so accommodate the interchangeable container (9) in the raised position (H) which constitutes the riding position, that the interchangeable container has a supported position accessible via a step-on board (22) which is supported on the load-bearing chassis (13).

3. A motor vehicle according to Claim 1 or 2, characterised in that the composite unit (11) can by means of the spring bellows (19, 20; 19', 20') be so positioned in an upper raised position (H1) which releases respective supporting members (21) for the interchangeable container (9) that afterwards the interchangeable container (9) can be set down in a free-standing loading and unloading position.

4. A motor vehicle according to one of Claims 1 to 3, characterised in that the wheels disposed on the air spring crank drives (17, 18) are effectively constructed as 8" or 10" wheels.

5. A motor vehicle according to one of Claims 1 to 4, characterised in that the load-bearing chassis part (13) is provided with two longitudinal members (31, 32) on the respective ends of which there are two cross-members (33, 34) which support at their ends the supporting and centring members (10) for the interchangeable container (9), the said cross-members having an end portion (36, 37, 38, 39) which projects freely beyond the area (35) of connection to the longitudinal members (31, 32).

6. A motor vehicle according to one of Claims 1 to 5, characterised in that the longitudinal members (31, 32) of the load-bearing chassis part (13) are at the back and in the region of the rear cross-member (34) provided with extension parts (40, 41) which support the step-on board (22).

7. A motor vehicle according to one of Claims 1 to 6, characterised in that the intermediate frame part (14) has two longitudinal struts (43, 44) supported at one end on an intermediate strut (42) disposed between the longitudinal members (31, 32) of the load-bearing chassis part (13) and which are at their other end connected to the front chassis part (12) by means of respective flange parts (15, 16).

8. A motor vehicle according to Claim 7, characterised in that the longitudinal struts (43, 44) of the intermediate frame part (14) engage under the leading cross-member (33).

9. A motor vehicle according to one of Claims 1 to 8, characterised in that as centring members (10) there is, connected via a bracing profile part (46) to the cross-member (33, 34) of the load-bearing chassis part (13), a centring mushroom (47), of which the cross-sectionally conical receiving surface (48) merges into a lateral surface (49) of which at least parts are cylindrical.

10. A motor vehicle according to one of Claims 1 to 9, characterised in that, as a supporting member (50) for the interchangeable container (9), a rubber pad (51) is disposed on each cross-member (33, 34) in the region of the respective centring mushroom (47).

11. A motor vehicle according to one of Claims 1 to 10, characterised in that as rapid locking members (52), locking wedges (53) are provided and are disposed in the respective connecting areas (35) between longitudinal members (31, 32) and cross-members (33, 34).

12. A motor vehicle according to Claim 11, characterised in that the locking wedge (53) can be so moved by a pushing motion (S) extending substantially parallel with the longitudinal axis (30) of the vehicle that a run-on surface (54) on the locking wedge (53) engages behind a mating member disposed in the bottom area of the interchangeable container (9).

13. A motor vehicle according to Claim 11 or 12, characterised in that the four locking wedges (53) disposed in the corner areas of the load-bearing chassis part (13) can be respectively moved individually via a mechanical, electrical, hydraulic and/or pneumatic drive means (55).

14. A motor vehicle according to one of Claims 1 to 13, characterised in that the composite unit (11) has in the region of the supporting members on the load-bearing part (13) a load plane (23) with a load height (L) of 45 to 60 cm and preferably 54 cm.

15. A motor vehicle according to one of Claims 1 to 14, characterised in that the centring mushrooms (47) are disposed on the load-bearing part at a distance away lengthwise (A) from one another of 2280 mm and are spaced apart transversely (B) by 1970 mm.

## Revendications

1. Véhicule à moteur pour le transport de conteneurs échangeables, dont le châssis (2), qui s'étend depuis la zone d'un essieu avant (4) se trouvant en dessous d'une cabine de chauffeur (5) jusque dans la zone d'un essieu arrière (6, 7), est pourvu d'une zone de réception de charge (8) présentant des verrouillages (10) pour un conteneur échangeable (9), ledit châssis pouvant être abaissé au moyen d'un essieu à manivelle de sa position d'élévation (H) constituant la position de marche vers une deuxième position d'élévation (H2) libérant le conteneur échangeable, caractérisé en ce que le chassis (2) se présente sous la forme d'une unité structurelle combinée (11) en substance en trois parties, qui présente une partie avant de châssis (12) prévue dans le mode de construction standard d'une camionnette, une partie de châssis de charge (13) avec un châssis à profil surbaissé et une partie de châssis intermédiaire (14) reliant les deux parties de châssis (12, 13) et deux essieux à manivelle à suspension pneumatique (17; 18) équipés chacun de deux soufflets de suspension (19, 20; 19', 20') sont prévus dans la zone de la partie de châssis de charge (13), lesdits essieux étant reliés par une commande d'air comprimé.

2. Véhicule à moteur selon la revendication 1, caractérisé en ce que l'unité structurelle combinée (11) reçoit le conteneur échangeable (9), via des éléments respectifs d'appui, de centrage et de verrouillage rapide (50, 47, 52), dans la position d'élévation (H) formant la position de marche de telle sorte que le conteneur échangeable présente un endroit de support accessible par un marche-pied (22) supporté par le châssis de charge (13).

3. Véhicule à moteur selon la revendication 1 ou 2, caractérisé en ce que l'unité structurelle combinée (11) peut être positionnée, au moyen des soufflets de suspension (19, 20; 19', 20'), dans une position d'élévation supérieure (H1) libérant des éléments de soutien respectifs (21) pour le conteneur échangeable (9) de telle sorte qu'ensuite, le conteneur échangeable (9) puisse être déposé dans un endroit autonome de chargement et de déchargement.

4. Véhicule à moteur selon l'une quelconque des revendications 1 à 3, caractérisé en ce que les roues, qui se trouvent sur les essieux à manivelle à suspension pneumatiques (17, 18), se présentent respectivement sous la forme de roues de 8" ou de 10".

5. Véhicule à moteur selon l'une quelconque des revendications 1 à 4, caractérisé en ce que la partie de châssis de charge (13) est équipée de deux longerons (31, 32) sur les extrémités respectives desquels sont agencées deux traverses (33, 34) portant du côté extrémité, les éléments d'appui et de centrage (10), pour le conteneur échangeable (9) ces traverses présentant une zone d'extrémité (36, 37, 38, 39) faisant saillie librement au-delà de la zone de liaison (35) avec les longerons (31, 32).

6. Véhicule à moteur selon l'une quelconque des revendications 1 à 5, caractérisé en ce que les longerons (31, 32) de la partie de châssis de charge (13) sont équipés, du côté arrière, dans la zone de la traverse arrière (34), de parties de prolongement (40, 41) sur lesquelles s'appuie le marche-pied (22).

7. Véhicule à moteur selon l'une quelconque des revendications 1 à 6, caractérisé en ce que la partie de châssis intermédiaire (14) présente deux entretoises longitudinales (43, 44) supportés, à une extrémité, par une entretoise intermédiaire (42) se trouvant entre les longerons (31, 32) de la partie de châssis de charge (13), lesdites entretoises longitudinales étant reliées, à l'autre extrémité, à la partie de châssis avant (12) au moyen de parties à flasques respectives (15, 16).

8. Véhicule à moteur selon la revendication 7, caractérisé en ce que les entretoises longitudinales (43, 44) de la partie de châssis intermédiaire (14) s'engagent en dessous de la traverse avant (33).

9. Véhicule à moteur selon l'une quelconque des revendications 1 à 8, caractérisé en ce qu'il est prévu comme élément de centrage (10), chaque fois un champignon de centrage (47) relié, au moyen d'une partie profilée de support (46), à la traverse (33, 34) de la partie de châssis de charge (13), champignon dont la surface réceptrice (48) de forme conique en coupe transversale se fond en une surface enveloppante (49) cylindrique au moins par endroits.

10. Véhicule à moteur selon l'une quelconque des revendications 1 à 9, caractérisé en ce que, comme élément d'appui (50) pour le conteneur échangeable (9), une plaque de caoutchouc (51) qui se trouve dans la zone des champignons de centrage respectifs (47) sur la traverse (33, 34) est chaque fois prévue.

11. Véhicule à moteur selon l'une quelconque des revendications 1 à 10, caractérisé en ce que comme éléments de verrouillage rapide (52) sont prévues des cales de verrouillage respectives (53) agencées dans la zone de liaison (35) des longerons (31, 32) et des traverses (33, 34).

12. Véhicule à moteur selon la revendication 11, caractérisé en ce que la cale de verrouillage (53) peut être déplacée, respectivement au moyen d'un déplacement de poussée (S) s'étendant en substance parallèlement à l'axe longitudinal (30) du véhicule de telle sorte qu'un élément de contrepartie se trouvant dans la zone du fond du conteneur échangeable (9) soit engagé et retenu par une surface en rampe (54) sur la cale de verrouillage (53).

13. Véhicule à moteur selon la revendication 11 ou 12, caractérisé en ce que les quatre cales de verrouillage (53) se trouvant dans les zones de coin de la partie de châssis de charge (13) peuvent être respectivement déplacées individuellement au moyen d'un organe de commande (55) mécanique, électrique, hydraulique et/ou pneumatique.

14. Véhicule à moteur selon l'une quelconque des revendications 1 à 13, caractérisé en ce que l'unité structurelle combinée (11) présente, dans la zone des éléments d'appui, sur la partie de charge (13), un plan de chargement (23) d'un hauteur de chargement (L) de 45 à 60 cm, de préférence de 54 cm.

15. Véhicule à moteur selon l'une quelconque des revendications 1 à 14, caractérisé en ce que les champignons de centrage (47) sont disposés sur la partie de châssis de charge à une distance longitudinale (A) de 2280 mm et à une distance transversale (B) de 1970 mm.
